(19) Europäisches Patentamt
European Patent Office
Office européen des brevets

(11) **EP 3 689 693 A1**

(12) **EUROPEAN PATENT APPLICATION**
published in accordance with Art. 153(4) EPC

(43) Date of publication:
**05.08.2020 Bulletin 2020/32**

(51) Int Cl.:
***B60W 20/00*** (2016.01)

(21) Application number: **17926605.1**

(22) Date of filing: **26.09.2017**

(86) International application number:
**PCT/JP2017/034757**

(87) International publication number:
**WO 2019/064345 (04.04.2019 Gazette 2019/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Kabushiki Kaisha Toshiba**
  **Minato-ku**
  **Tokyo 105-8001 (JP)**

• **Toshiba Infrastructure Systems & Solutions Corporation**
  **Kawasaki-shi, Kanagawa 212-0013 (JP)**

(72) Inventors:
• **KUWANO, Yuuki**
  **Tokyo 105-8001 (JP)**
• **KIKKAWA, Kenichi**
  **Kawasaki-shi**
  **Kanagawa 212-0013 (JP)**

(74) Representative: **AWA Sweden AB**
**Junkersgatan 1**
**582 35 Linköping (SE)**

(54) **HYBRID VEHICLE**

(57)    The vehicle of the embodiment includes a battery device BT including: a plurality of modules MDL each including a battery monitoring circuit CB configured to detect voltages of respective secondary battery cells; a current sensor CS configured to detect a current flowing through the modules MDL; and a battery management circuit CA configured to obtain a detected current value of the modules MDL and detected voltage values of the secondary battery cells; and a controller CTR configured to calculate internal resistances of the respective secondary battery cells based on open-circuit voltages of the secondary battery cells, a charging current value of the modules MDL, and closed-circuit voltages of the secondary battery cells, wherein, when the vehicle is stopped, the controller CTR lowers an excitation current of the first electric motor 30 until the converter 40 can control the first electric motor 30 with multiple pulses in one cycle, charges the battery modules MDL using power output from the internal combustion engine 10, and obtains values of the closed-circuit voltages and charging current.

F I G. 3

## Description

FIELD

Embodiments described herein relate generally to a hybrid vehicle.

BACKGROUND

A battery device may be configured by connecting a plurality of battery modules in series and in parallel in accordance with required charging/discharging capacity. The battery modules each include, for example, an assembled battery including a plurality of secondary battery cells, and a battery monitoring circuit configured to detect a voltage of each of the secondary battery cells.

The battery device is mounted as a power source of various electronic devices such as a portable device and a mobile object. For example, a hybrid vehicle can drive a load with at least one of power (mechanical energy) obtained from a prime mover and electric energy obtained from an electric motor. The hybrid vehicle includes DC links electrically connecting, for example, two inverters, and can be configured by electrically connecting a battery device to the DC links. The prime mover is electrically connected to the DC links via a generator and an inverter. The electric motor is electrically connected to the DC links via an inverter.

The drive voltage of the electric motor is supplied by a power converter that switches a DC voltage supplied from the DC links with a semiconductor power switch and generates an AC voltage having a given amplitude and a given frequency. In general, for the purpose of suppressing generation of harmonic components due to switching, a switching frequency sufficiently higher than the drive frequency of the electric motor is set, and a gate signal of the switch is generated by means of pulse width modulation (PMW). In this case, the upper limit of the amplitude of the AC voltage that can be generated by the power converter is half the line voltage (DC voltage) of the DC links.

For example, if a voltage waveform close to a square wave is taken at the expense of suppression of harmonic components, the amplitude of the fundamental component of the output voltage of the power converter can be further increased. This driving method of the power converter is sometimes referred to as overmodulation driving (synchronous multi-pulse driving), and in particular as one-pulse driving when a complete square wave is obtained. Overmodulation driving and one-pulse driving of the inverter can increase the driving voltage without changing the line voltage of the DC links, and can drive the electric motor at high speed.

CITATION LIST

PATENT LITERATURE

[Patent Literature 1] Jpn. Pat. Appln. KOKAI Publication No. 2016-125932

SUMMARY

TECHNICAL PROBLEM

It is known that a secondary battery cell deteriorates due to the influence of the use environment, the number of charge/discharge cycles, and the like. Conventionally, estimating the deterioration state based on the internal resistance of the secondary battery cell has been proposed.

A plurality of battery monitoring circuits output detected voltage values to a battery management circuit. The battery management circuit can detect a current flowing through a plurality of assembled batteries connected in series. For example, when internal resistances are calculated using the values of closed-circuit voltages of a plurality of secondary battery cells and a current flowing through an assembled battery, the accuracy of calculating the internal resistances may decrease unless the timing of measuring open-circuit voltages and the timing of measuring the current flowing through the assembled battery are not synchronized.

As the charging/discharging capacity of the battery device increases, the number of battery modules controlled by the battery management circuit increases; therefore, it has been difficult for the battery management circuit to synchronize the timing of measuring closed-circuit voltages and the timing of measuring the current flowing through the assembled battery for a plurality of secondary battery cells of a plurality of battery modules.

Embodiments of the present invention have been made in view of the above circumstances, and are intended to provide a hybrid vehicle that accurately calculates the internal resistances of secondary battery cells.

SOLUTION TO PROBLEM

The hybrid vehicle of the present embodiment comprises: an internal combustion engine; a first electric motor; a second electric motor connected to a power combining mechanism; a power dividing mechanism configured to distribute power of the internal combustion engine to the first electric motor and the power combining mechanism; a converter configured to drive the first electric motor by switching a driving method in accordance with a modulation rate; an inverter connected to the converter via DC links and configured to drive the second electric motor; an axle configured to rotate with energy supplied from the power combining mechanism; a battery device connected to the DC links and including: a plurality of battery modules each including: an assembled battery including a plurality of secondary battery cells; and a battery monitoring circuit configured to detect voltages of the respective secondary battery cells; a current sensor configured to detect a current flowing through the battery modules; and a battery management circuit configured to control the battery monitoring circuits and obtain a detected value of the current flowing through the battery modules and detected values of the voltages of the secondary battery cells; and a controller configured to calculate internal resistances of the respective secondary battery cells based on open-circuit voltages of the secondary battery cells, a charging current value of the battery modules, and closed-circuit voltages of the secondary battery cells, wherein, when the hybrid vehicle is stopped, the controller obtains, from the battery management circuit, values of the open-circuit voltages of the secondary battery cells, the closed-circuit voltages of the secondary battery cells when the converter lowers an excitation current of the first electric motor until the first electric motor is controllable with multiple pulses in one cycle and when the battery modules are charged with the power output from the internal combustion engine, and the charging current of the battery modules.

BRIEF DESCRIPTION OF THE DRAWINGS

FIG. 1 is a block diagram schematically showing a configuration example of the hybrid vehicle of the present embodiment.
FIG. 2 is a diagram for explaining an example of the operation of the power dividing mechanism.
FIG. 3 is a diagram schematically showing a configuration example of the battery device shown in FIG. 1.
FIG. 4 is a diagram showing an example of a time change between the battery current and the battery voltage of when the battery module is charged.
FIG. 5 is a diagram for explaining an example of the timing of communication between the battery management circuit and the battery monitoring circuits.
FIG. 6 is a diagram for explaining an example of the operations of the generator and the converter shown in FIG. 1.
FIG. 7 is a diagram for explaining an example of the relationship between the generator rotation speed and the converter driving method in the hybrid vehicle of the embodiment.
FIG. 8 is a flowchart for explaining an example of the operation to calculate the internal resistance values of the secondary battery cells in the hybrid vehicle of the embodiment.

DETAILED DESCRIPTION

Hereinafter, a hybrid vehicle according to an embodiment will be described in detail with reference to the drawings.

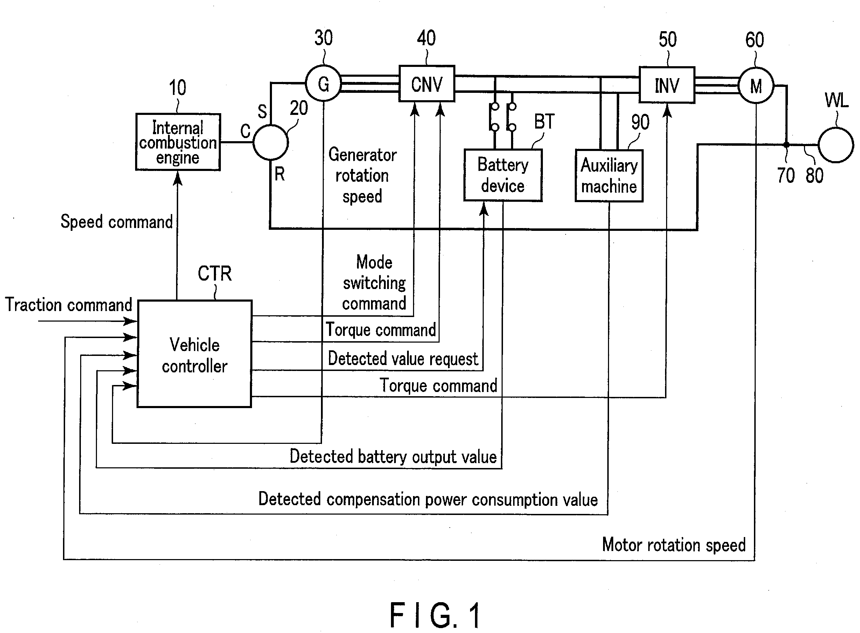

FIG. 1 is a block diagram schematically showing a configuration example of the hybrid vehicle of the present embodiment.

The hybrid vehicle includes an internal combustion engine 10, a power dividing mechanism 20, a generator (first electric motor) 30, a converter 40, an inverter 50, a motor (second electric motor) 60, a power combining mechanism 70, an axle 80, an auxiliary machine 90, a wheel WL, a vehicle controller CTR, and a battery device BT.

The internal combustion engine 10 is a prime mover, such as a gasoline engine or a diesel engine, that generates mechanical energy for driving the hybrid vehicle.

The power dividing mechanism 20 is a triaxial power dividing mechanism that divides mechanical energy generated by the internal combustion engine 10 into energy supplied to the generator 30 side and energy supplied to the wheel WL side (axle 80 side).

The power dividing mechanism 20 is, for example, a planetary gear mechanism (not shown), and includes a sun gear S, a planetary gear P circumscribing the sun gear S, a ring gear R in which the planetary gear P is inscribed, and a planetary carrier C that rotates along the orbit of the planetary gear P. In the present embodiment, the planetary carrier C is rotated by mechanical energy generated by the internal combustion engine 10. The rotational power of the sun gear S is transmitted to the generator 30. The rotational power of the ring gear R is transmitted to the power combining mechanism 70 connected to the axle 80. The rotation speed (rpm) of the ring gear R is proportional to the vehicle speed.

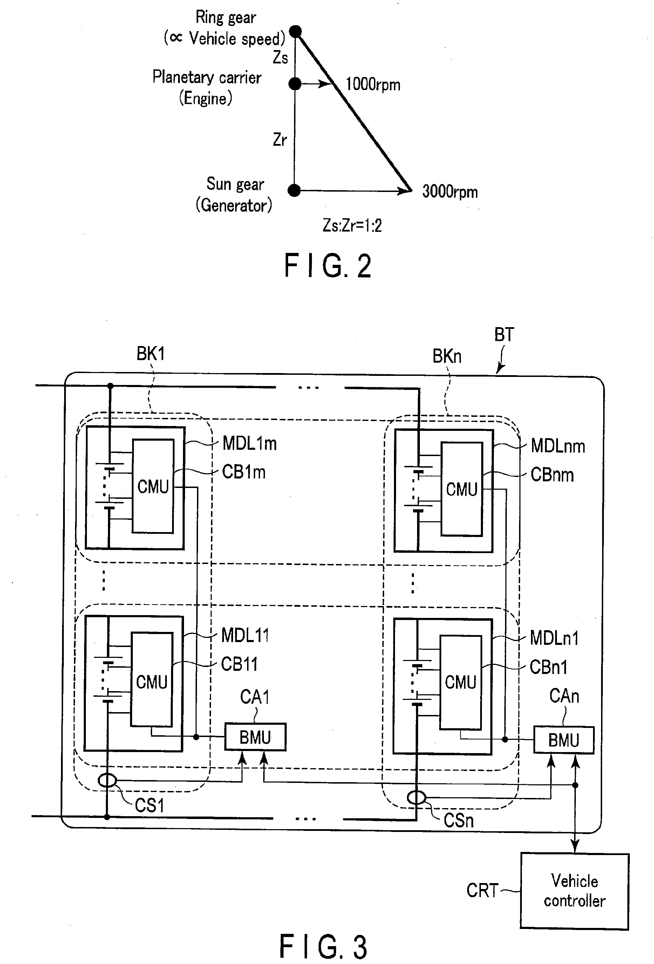

FIG. 2 is a diagram for explaining an example of the operation of the power dividing mechanism.

The operation of the power dividing mechanism 20 is determined by the gear ratio between the sun gear S and the ring gear R. In this example, the ratio between the gear number $Zs$ of the sun gear S and the gear number $Zr$ of the ring gear is $Zs:Zr = 1:2$. For example, when the vehicle speed is zero, the rotation speed of the ring gear is zero (rpm). At this time, if the rotation speed of the planetary carrier is 1000 (rpm), the rotation speed of the sun gear is 3000 (rpm), which is three times that of the planetary carrier, and the generator 30 operates in a high-speed range.

The generator 30 is an induction motor (IM) that can generate AC power with the power supplied from the power dividing mechanism 20 and output the AC power to the converter 40, and that is rotationally driven by AC power supplied from the converter 40. The generator 30 includes a detector (not shown) that detects, for example, a rotation speed. The rotation speed of the generator 30 is supplied to the vehicle controller CTR.

The converter 40 is a power converter which can convert three-phase AC power output from the generator 30 into DC power and output it to the DC links, and can convert DC power supplied from the DC links into three-phase AC power and output it to the generator 30. The converter 40 is electrically connected to the inverter 50, the battery device BT, and the auxiliary machine 90 via the DC links.

The converter 40 receives a mode switching command and a torque command from the vehicle controller CTR. The converter 40 can adjust the excitation current value of the generator 30 in accordance with the mode switching command. The converter 40 operates the generator 30 to realize the torque command.

The inverter 50 is a power converter which can convert DC power supplied from the DC links into AC power and output it to the motor 60. The inverter 50 can also convert AC power supplied from the motor 60 into DC power and output it to the DC links. The inverter 50 receives a torque command from the vehicle controller CTR. The inverter 50 outputs AC power to the motor 60 to realize the received torque command.

The motor 60 is an electric motor driven by AC power supplied from the inverter 50, and converts electric energy into mechanical energy and outputs it to the power combining mechanism 70.

The power combining mechanism 70 transmits, to the axle 80, energy obtained by combining the mechanical energy transmitted from the ring gear R of the power dividing mechanism 20 and the mechanical energy supplied from the inverter 50. The wheel WL is rotationally driven via the axle 80.

The battery device BT can be charged with power supplied from the DC links, and can discharge power to the DC links. The battery device BT is electrically connected to the DC links via a breaker (not shown). The breaker is, for example, an electromagnetic contactor, and its operation is controlled by the vehicle control circuit CTR.

The auxiliary machine 90 includes a load, such as a lighting device, mounted in the hybrid vehicle. The auxiliary machine 90 is connected to the battery device BT, the converter 40, and the inverter 50 via the DC links, and is driven by energy supplied from the DC links. The auxiliary machine 90 detects a power consumption and outputs it to the vehicle controller CTR.

The vehicle controller CTR is a host controller that controls the internal combustion engine 10, the generator 30, the converter 40, the inverter 50, the motor 60, and the battery device BT to operate in conjunction with each other in accordance with an externally supplied traction command. The vehicle controller CTR is an arithmetic circuit including at least one processor, such as a central processing unit (CPU) or a micro processing unit (MPU), and a memory.

The vehicle controller CTR is configured to calculate the internal resistances of a plurality of secondary battery cells included in the battery device BT when, for example, the hybrid vehicle is stopped. The vehicle controller CTR can determine, for example, the degree of deterioration of the battery device BT using the internal resistance values of the secondary battery cells. The vehicle controller CTR may perform the operation to calculate the internal resistances of the secondary battery cells by executing a program recorded in the memory.

FIG. 3 is a diagram schematically showing a configuration example of the battery device shown in FIG. 1.

The battery device BT includes a plurality of battery banks BK1 to BKn connected in parallel to the DC links and a plurality of battery management circuits (battery management units (BMUs)) CA1 to CAn corresponding to the battery banks BK1 to BKn. The battery banks BK1 to BKn each include a plurality of battery modules MDL11 to MDLnm and a current sensor CS.

The operations of the battery modules MDL11 to MDLnm included in each of the battery banks BNK1 to BNKn are controlled by the corresponding battery management circuit CA1 to CAn. In the present embodiment, m (positive integer) battery modules MDL11 to MDL1m, ..., or MDLn1 to MDLnm are connected in series in each of the battery banks BNK1 to BNKn, and n (positive integer) battery banks BNK1 to BNKn are connected in parallel.

The battery modules MDL11 to MDLnm can each be electrically connected to the DC links via a switcher (not shown) such as a contactor. The battery management circuits CA1 to CAn can switch the electrical connections between the DC links and the respective battery banks BK1 to BKn by controlling the switchers.

The battery modules MDL11 to MDLnm each include an assembled battery including a plurality of secondary battery cells, and a battery monitoring circuit (cell monitoring unit (CMU)) CB11 to CBnm.

The secondary battery cell is a chargeable and dischargeable battery and is, for example, a lithium ion battery or a nickel metal hydride battery.

The battery monitoring circuits CB11 to CBnm included in each of the battery banks BK1 to BKn are communicatively connected to a common battery management circuit CA1 to CAn via a transmission line. In the present embodiment, each of the battery monitoring circuits CB11 to CBnm can perform serial communication with the corresponding battery management circuit CA1 to CAn, and the battery monitoring circuits CB11 to CBnm communicate with the battery management circuits CA1 to CAn based on, for example, a control area network (CAN) protocol. Note that the battery monitoring circuits CB11 to CBnm may communicate with the battery management circuits CA1 to CAn by wired communication means or wireless communication means.

The battery monitoring circuits CB11 to CBnm each detect the voltages of the secondary battery cells included in the assembled battery and the temperature of the area around the assembled battery. The battery monitoring circuits CB11 to CBnm can each output detected values to the corresponding battery management circuit CA1 to CAn in a predetermined communication cycle (a [seconds]). The operations of the battery monitoring circuits CB11 to CBnm are controlled by control signals from the battery management circuits CA1 to CAn.

The current sensors CS1 to CSn each detect currents flowing through the assembled batteries included in the corresponding battery bank BK1 to BKn, and supply the values of the detected currents to the corresponding battery management circuit CA1 to CAn.

The battery management circuits CA1 to CAn are communicatively connected to the vehicle controller CTR via a transmission line. In the present embodiment, the battery management circuits CA1 to CAn communicate with the vehicle controller CTR based on, for example, the control area network (CAN) protocol. Note that the battery management circuits CA1 to CAn may communicate with the vehicle controller CTR by wired communication means or wireless communication means.

The battery management circuits CA1 to CAn each output voltage values and temperature values received from the corresponding battery monitoring circuits CB11 to CBnm and a current value (battery output detected value) received from the corresponding current sensor CS1 to CSn to the vehicle controller CTR in a predetermined cycle. The operations of the battery management circuits CA1 to CAn are controlled by control signals from the vehicle controller CTR.

The vehicle controller CTR can calculate internal resistance values of the secondary battery cells based on the voltage values and current values received from the battery management circuits CA1 to CAn. The vehicle controller CTR obtains an open-circuit voltage (OCV) value Vocv, closed-circuit voltage (CCV) value Vccv, and current value I of a secondary battery cell, and calculates an internal resistance R of the secondary battery cell. The internal resistance of the secondary battery cell can be calculated by, for example, the following formula (1):

$$R \, [\Omega] \, = \, (Vccv \, - \, Vocv)/I \quad (1)$$

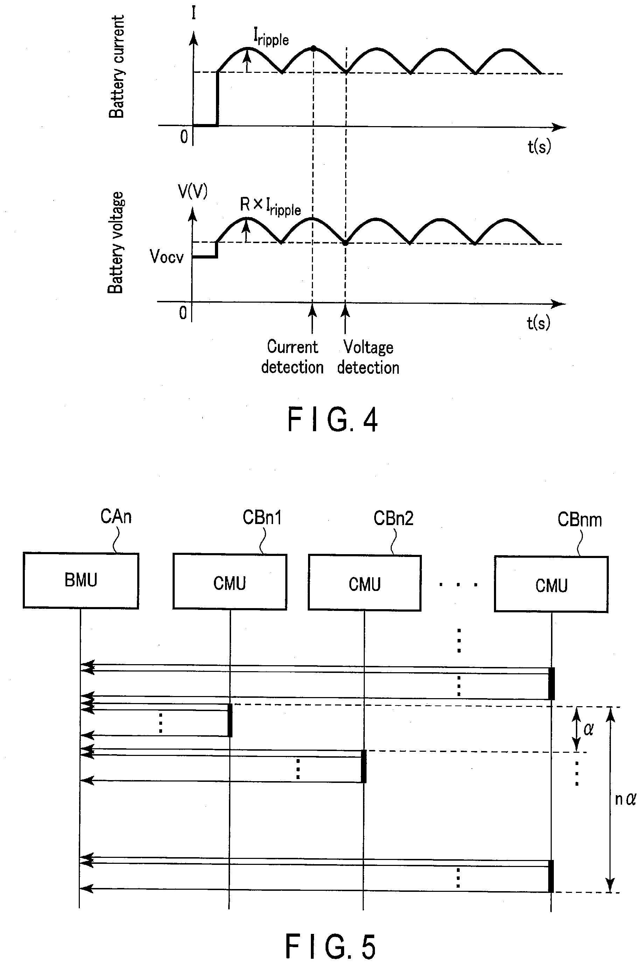

FIG. 4 is a diagram showing an example of a time change between the battery current and the battery voltage when the battery module is charged.

When the battery module MDL11 to MDLnm is not charged or discharged, the battery voltage is the open-circuit voltage Vocv, and when charging of the battery modules MDL11 to MDLnm starts and a charging current flows through the assembled battery, the battery voltage becomes the closed-circuit voltage Vccv.

The battery module MDL11 to MDLnm can be charged by a current supplied from the DC links.

The vehicle controller CTR can convert the power of the internal combustion engine 10 into DC power with the generator 30 and the converter 40 and supply it to the battery device BT via the DC links. At this time, if the vehicle speed is zero, the power obtained from the internal combustion engine 10 is supplied only to the generator 30 via the power dividing mechanism 20, and thereby the generator 30 is operated in a high-speed range.

When the generator 30 operates in a high-speed range, the converter 40 performs overmodulation driving or one-pulse driving. In overmodulation driving, for example, the output command on the AC side of the converter 40 has a plurality of nonlinear square waves synchronized with the carrier cycle. In one-pulse driving, for example, the output command on the AC side of the converter 40 has a one-pulse square wave synchronized with the carrier cycle. That is, one-pulse driving is a driving mode in which the converter 40 is controlled with one pulse in one cycle, and overmodulation driving and asynchronous PWM driving are driving modes in which the converter 40 is controlled with multiple pulses in one cycle.

When overmodulation driving or one-pulse driving is performed, even if the generator 30 is controlled so that the charging current and the charging current become constant with respect to the battery device BT, pulsation is generated in the current flowing through the assembled batteries of the battery modules MDL11 to MDLnm. This current pulsation is caused, for example, by a large difference between the output command value and the actual output voltage value when the square wave crosses zero, and the pulsation generated in the current is greater in the operation with one-pulse driving than in the operation with overmodulation driving.

When the generator 30 is operating in a high-speed range as described above, if the timings of detecting the voltage and current of the secondary battery cell are in synchronization, both values similarly include an error caused by the pulsation width of the current; therefore, the calculation error in the internal resistance value can be suppressed. However, if the timings of detecting the secondary battery cell voltage and current are not in synchronization, the calculation error in the internal resistance value may become large.

When the timings of detecting the secondary battery cell voltage and current are not synchronized, for example when the pulsation width of the current Iripple is maximum at the timing of detecting the battery current and the pulsation width of the secondary battery cell voltage (= R (internal resistance of secondary battery cell) × Iripple) is minimum at the timing of detecting the secondary battery cell voltage, the calculation error in the internal resistance value becomes large and the calculation accuracy becomes low.

FIG. 5 is a diagram for explaining an example of the timings of communications between the battery management circuit and the battery monitoring circuits.

The battery monitoring circuits CBn1 to CBnm each periodically detect voltage values of a plurality of secondary battery cells and transmit the detected values to the battery management circuit CAn. When the cycle in which the battery monitoring circuits CBn1 to CBnm transmit the detected values of the voltages of the secondary battery cells to the battery management circuit CAn is α (ms), the time required for the battery management circuit CAn to complete the reception of the detected values from all the corresponding battery monitoring circuits CBn1 to CBnm is m × α (ms).

Each of the battery monitoring circuits CBn1 to CBnm can detect the voltages of the secondary battery cells with substantially no time difference. However, when the voltage values of the secondary battery cells are transmitted to a common battery management circuit CAn, a difference corresponding to the communication cycle ((m-1)α at a maximum) is caused in the timing of detecting the voltage of the secondary battery cell between the battery monitoring circuits CBn1 to CBnm. When the number of battery modules MDLn1 to MDLnm controlled by one battery management circuit CAn is large, it has been difficult to synchronize the timing of detecting the voltage of the secondary battery cell and the timing of detecting the current.

In the present embodiment, in order to avoid a decrease in the accuracy of calculating the internal resistance value of the secondary battery cell, the generation of pulsation in the charging current of the secondary battery cell is suppressed when the internal resistance of the secondary battery cell is calculated.

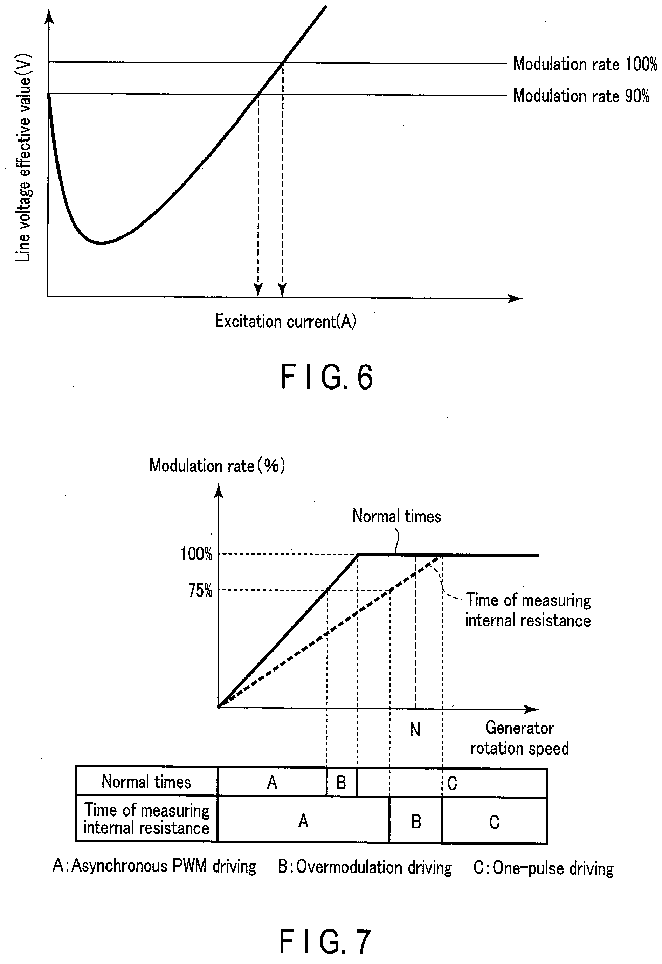

FIG. 6 is a diagram for explaining an example of the operations of the generator and converter shown in FIG. 1.

FIG. 6 shows an example of the relationship between the generator excitation current and the line voltage effective value of the AC voltage output from the generator to the converter when the generator speed and output are constant.

In this example, the generator 30 is, for example, an induction motor (IM). The line voltage effective value is an effective value of the AC voltage applied from the converter 40 to the generator 30. The modulation rate is a ratio of the line voltage effective value when the maximum voltage that can be output from the converter 40 to the generator 30 is 100%, and is a ratio (%) of the line voltage effective value to the DC voltage between the DC links.

When the excitation current of the generator 30 increases from zero, the line voltage effective value decreases to a minimum value one time, and increases thereafter as the excitation current increases. In the region where the excitation current is larger than the excitation current corresponding to the minimum value of the line voltage effective value, as the excitation current decreases, the modulation rate of the converter 40 decreases even when the rotation speed of the generator is constant.

This example shows that the modulation rate of the converter 40 can be adjusted by adjusting the magnitude of the excitation current of the generator 30 when the rotation speed and output of the generator 30 are constant.

Therefore, upon measurement of the internal resistance of the secondary battery cell, the hybrid vehicle of the present embodiment adjusts the modulation rate of the converter 40 by making the excitation current of the generator 30 smaller than normal, thereby preventing the converter 40 from operating with one-pulse driving.

FIG. 7 is a diagram for explaining an example of the relationship between the generator rotation speed and the converter driving method in the hybrid vehicle of the embodiment.

When detecting the closed-circuit voltages of the secondary battery cells in order to measure the internal resistances of the secondary battery cells, the vehicle controller CTR makes the excitation current of the generator 30 lower than normal (in the period other than when measuring the internal resistances of the secondary battery cells) to lower the modulation rate of the converter 40, and allows the converter 40 to be driven by overmodulation driving or asynchronous PWM driving.

Specifically, the vehicle controller CTR outputs a mode switching command to the converter 40, and performs control to have an excitation current different from that applied at normal times applied to the generator 30 at the time of measuring the internal resistance so as to change the modulation rate of the converter 40 between the time of measuring the internal resistance and the normal times.

The converter 40 switches the magnitude of the excitation current of generator 30 in accordance with the value of the mode switching command. The values of the excitation current at the time of measuring the internal resistance and the excitation current at normal times may be values set in the converter 40 in advance. In the vehicle controller CTR, if the speed command of the internal combustion engine 10 at the time of measuring the internal resistance is set in advance, the rotation speed of the generator 30 of when the hybrid vehicle is stopped can also be set in advance. The excitation current at the time of measuring the internal resistance may be set so that the converter 40 can be operated by overmodulation driving or asynchronous PWM driving when the generator 30 operates at a predetermined rotation speed (for example, N (rpm)).

When the rotation speed and output of the generator 30 are constant, if the excitation current decreases, the line voltage effective value decreases, and the current flowing through the converter 40 increases. Therefore, the lower limit value of the excitation current of the generator 30 may be set based on the upper limit of the current flowing through the converter 40 (such as the withstand voltage of the switching element).

When the rotation speed and output of the generator 30 are constant, if the excitation current of the generator 30 decreases, the modulation rate of the converter 40 decreases. Therefore, the excitation current at the time of measuring the internal resistance is set to be smaller than the excitation current at normal times.

The vehicle controller CTR sets the value of the torque command of converter 40 in accordance with the rotation speed (rpm) of the generator 30. The converter 40 calculates a modulation rate based on the mode switching command, the torque command, and the voltage between the DC links, and switches the driving method in accordance with the value of the modulation rate.

In the example shown in FIG. 7, the converter 40 operates with asynchronous PWM driving when the modulation rate is less than 75%, operates with overmodulation driving when the modulation rate is 75% or more and less than 100%, and operates with one-pulse driving when the modulation rate is 100%.

For example, when the rotation speed of the generator 30 is N (rpm) at normal times, the modulation rate of the converter 40 is 100%, and the converter 40 operates with one-pulse driving. When the hybrid vehicle is stopped, if the excitation current of the generator 30 is decreased and the rotation speed of the generator 30 becomes N (rpm), the modulation rate of the converter 40 becomes 75% or more and less than 100%, and the converter 40 operates with overmodulation driving.

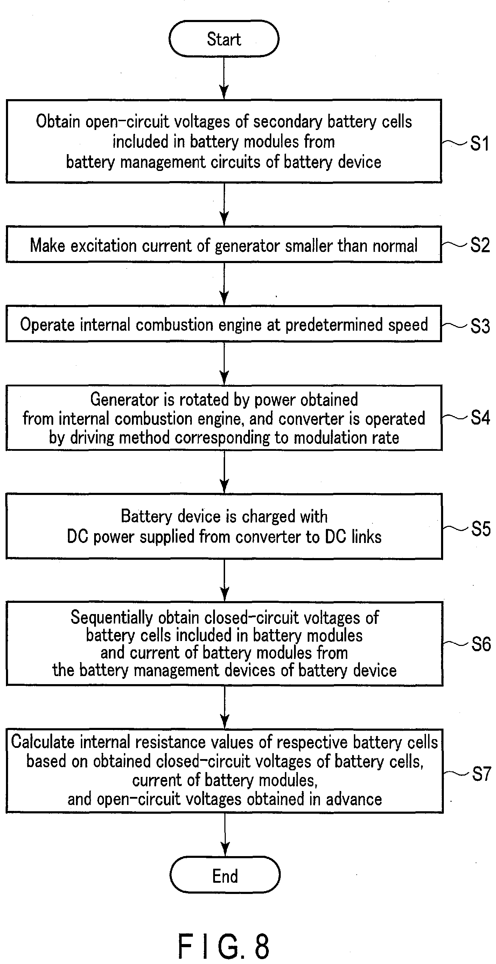

FIG. 8 is a flowchart for explaining an example of the operation to calculate the internal resistance values of the secondary battery cells in the hybrid vehicle of the embodiment.

In this example, the vehicle controller CTR calculates the internal resistance values of the secondary battery cells when the hybrid vehicle is stopped.

The vehicle controller CTR obtains open-circuit voltages of the secondary battery cells included in the battery modules MDL11 to MDLnm from the battery management circuits CA1 to CAn of the battery device BT. (Step S1)

The vehicle controller CTR sets the excitation current of the generator 30 to take a value different from that at normal times. Specifically, the vehicle controller CTR controls the converter 40 with the mode switching command, and makes the excitation current of the generator 30 smaller than normal. Here, the magnitude of the excitation current of the generator 30 is set such that, for example, the rotation speed of the generator 30 when calculating the internal resistance values of the secondary battery cells is set in advance, and the converter 40 performs overmodulation driving or asynchronous PWM driving at the set rotation speed. (Step S2)

Subsequently, the vehicle controller CTR operates the internal combustion engine 10 with a speed command so that the hybrid vehicle has a predetermined speed. At this time, the hybrid vehicle is stopped; therefore, the power generated by the operation of the internal combustion engine 10 is supplied to the generator 30 by the power dividing mechanism 20. (Step S3)

The generator 30 is rotated by the power obtained from the internal combustion engine 10. The vehicle controller CTR obtains the rotation speed from the generator 30 (or based on a preset rotation speed), calculates a torque command corresponding to the rotation speed, and outputs the torque command to converter 40. The converter 40 calculates the modulation rate using the mode switching command, the torque command, and the DC link voltage. The converter 40 operates with a driving method corresponding to the modulation rate. At this time, the excitation current of the generator 30 is smaller than normal; therefore, the modulation rate of the converter 40 with respect to the rotation speed of the generator 30 is smaller than normal. Therefore, even when the generator 30 is rotating at high speed, the converter 40 can be operated by asynchronous PWM driving or overmodulation driving, and when the internal resistance values of the secondary battery cells are calculated, the converter 40 can be prevented from operating with one-pulse driving. (Step S4)

The converter 40 converts AC power supplied from the generator 30 into DC power and supplies it to the DC links. The battery device BT is charged with the DC power supplied from the DC links. (Step S5)

The vehicle controller CTR requests the respective values of the closed-circuit voltages of the secondary battery cells included in the battery modules MDL11 to MDLnm and the current flowing through the battery modules, from each of the battery management circuits CA1 to CAn.

In accordance with the request from the vehicle controller CTR, each of the battery management circuits sequentially obtains closed-circuit voltages of the secondary battery cells from the battery modules, obtains a current flowing through the battery modules, and outputs the closed-circuit voltage values and current value to the vehicle controller CTR. (Step S6)

At this time, in each of the battery modules MDL1 to MDLn, the battery monitoring circuit CB11 to CBnm can substantially simultaneously obtain the closed-circuit voltages of the secondary battery cells. However, the battery management circuits CA1 to CAn each sequentially communicate with the corresponding battery monitoring circuits CB11 to CBnm, and obtain closed-circuit voltages of the secondary battery cells from the corresponding battery monitoring circuits CB11 to CBnm; therefore, a gap corresponding to the communication cycle is caused between the timings of obtaining closed-circuit voltages . For example, when the ripple generated in the charging current of secondary battery cells is large, the magnitude of the current ripple changes depending on the timing of obtaining the closed-circuit voltage, and the internal resistance values of the secondary battery cells cannot be accurately calculated.

On the other hand, in the hybrid vehicle of the present embodiment, when the internal resistance values of the secondary battery cells are calculated, the converter 40 can be prevented from operating with one-pulse driving, and the ripple generated in the charging current of the secondary battery cells can be kept low. Accordingly, the accuracy of calculating the internal resistance values of the secondary battery cells can be improved.

The vehicle controller CTR calculates the internal resistance values of the secondary battery cells based on the closed-circuit voltages of the secondary battery cells obtained from the battery management circuits CA1 to CAn, the current of the battery modules MDL1 to MDLn, and the open-circuit voltages of the secondary battery cells measured in advance when the battery device BT is not charged, as described above. (Step S7)

As described above, the hybrid vehicle of the present embodiment enables accurately calculating the internal resistances of the secondary battery cells.

In the above-described embodiment, the generator 30 is described as an induction motor (IM), but may be a synchronous motor (PM) . When a synchronous motor is employed, the direction of the excitation current is a direction that cancels the magnetic force of the rotor.

Although several embodiments of the present invention have been described, these embodiments are presented as examples and are not intended to limit the scope of the invention. These novel embodiments can be implemented in various other forms, and various omissions, replacements, and changes can be made without departing from the spirit of the invention. These embodiments and modifications thereof are included in the scope and gist of the invention, and are included in the invention described in the claims and the equivalents thereof.

**Claims**

1. A hybrid vehicle **characterized by** comprising:

   an internal combustion engine;
   a first electric motor;
   a second electric motor connected to a power combining mechanism;
   a power dividing mechanism configured to distribute power of the internal combustion engine to the first electric motor and the power combining mechanism;
   a converter configured to drive the first electric motor by switching a driving method in accordance with a modulation rate;
   an inverter connected to the converter via DC links and configured to drive the second electric motor;
   an axle configured to rotate with energy supplied from the power combining mechanism;
   a battery device connected to the DC links and including:

      a plurality of battery modules each including: an assembled battery including a plurality of secondary battery cells; and a battery monitoring circuit configured to detect voltages of the respective secondary battery cells;
      a current sensor configured to detect a current flowing through the battery modules; and
      a battery management circuit configured to control the battery monitoring circuits and obtain a detected value of the current flowing through the battery modules and detected values of the voltages of the secondary battery cells; and

   a controller configured to calculate internal resistances of the respective secondary battery cells based on open-circuit voltages of the secondary battery cells, a charging current value of the battery modules, and closed-circuit voltages of the secondary battery cells,
   wherein, when the hybrid vehicle is stopped, the controller obtains, from the battery management circuit, values of the open-circuit voltages of the secondary battery cells, the closed-circuit voltages of the secondary battery cells when the converter lowers an excitation current of the first electric motor until the first electric motor is controllable with multiple pulses in one cycle and when the battery modules are charged with the power output from the internal combustion engine, and the charging current of the battery modules.

2. The hybrid vehicle according to claim 1, **characterized in that** the assembled batteries of the battery modules are connected in series between the DC links,
   the battery monitoring circuits are communicatively connected to a corresponding common battery management circuit, and
   the battery monitoring circuits sequentially transmit detected values to the common battery management circuit in a predetermined communication cycle.

3. The hybrid vehicle according to claim 1 or 2, **characterized in that**, when obtaining the values of the closed-circuit voltages of the secondary battery cells and the charging current of the battery modules for calculating the internal resistances of the respective secondary battery cells, the controller switches a drive mode of the converter from one-pulse driving in which the first motor is controlled by one pulse in one cycle to overmodulation driving or asynchronous PWM driving in which the first motor is controlled by multiple pulses in one cycle.

F I G. 1

EP 3 689 693 A1

Ring gear
(∝ Vehicle speed)

Zs

Planetary carrier
(Engine)

1000rpm

Zr

Sun gear
(Generator)

3000rpm

Zs:Zr=1:2

# FIG. 2

BT

BK1

BKn

MDL1m
CB1m

CMU

MDLnm
CBnm

CMU

MDL11
CB11

CMU

CA1

BMU

MDLn1
CBn1

CMU

CAn

BMU

CS1

CSn

CRT

Vehicle
controller

# FIG. 3

I

Battery current

$I_{ripple}$

0                                  t(s)

V(V)

Battery voltage

$R \times I_{ripple}$

Vocv

0                                  t(s)

Current    Voltage
detection   detection

F I G. 4

CAn           CBn1          CBn2          CBnm

| BMU | CMU | CMU | · · · | CMU |

$\alpha$

$n\alpha$

F I G. 5

11

F I G. 6

F I G. 7

| | | | | | | | |
|---|---|---|---|---|---|---|---|
| Normal times | | A | B | | | C | |
| Time of measuring internal resistance | | A | | | B | C | |

A: Asynchronous PWM driving    B: Overmodulation driving    C: One-pulse driving

Start

Obtain open-circuit voltages of secondary battery cells
included in battery modules from
battery management circuits of battery device ~S1

Make excitation current of generator smaller than normal ~S2

Operate internal combustion engine at predetermined speed ~S3

Generator is rotated by power obtained
from internal combustion engine, and converter is operated
by driving method corresponding to modulation rate ~S4

Battery device is charged with
DC power supplied from converter to DC links ~S5

Sequentially obtain closed-circuit voltages of
battery cells included in battery modules
and current of battery modules from
the battery management devices of battery device ~S6

Calculate internal resistance values of respective battery cells
based on obtained closed-circuit voltages of battery cells,
current of battery modules,
and open-circuit voltages obtained in advance ~S7

End

# F I G. 8

## INTERNATIONAL SEARCH REPORT

| International application No. |
| --- |
| PCT/JP2017/034757 |

**A. CLASSIFICATION OF SUBJECT MATTER**
Int. Cl. B60W20/00(2016.01)i

According to International Patent Classification (IPC) or to both national classification and IPC

**B. FIELDS SEARCHED**

Minimum documentation searched (classification system followed by classification symbols)
Int. Cl. B60W10/00-20/50, B60L1/00-3/12, B60L7/00-13/00, B60L15/00-15/42, H02M1/00-1/44, H02M7/00-7/40

Documentation searched other than minimum documentation to the extent that such documents are included in the fields searched
Published examined utility model applications of Japan     1922-1996
Published unexamined utility model applications of Japan   1971-2017
Registered utility model specifications of Japan           1996-2017
Published registered utility model applications of Japan   1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2015-230235 A (HITACHI, LTD.) 21 December 2015, paragraphs [0042], [0045], [0061], fig. 1-3 (Family: none) | 1-3 |
| A | JP 2004-279242 A (TOYOTA MOTOR CORP.) 07 October 2004, paragraphs [0043]-[0045] (Family: none) | 1-3 |
| A | JP 2008-175556 A (TOYOTA MOTOR CORP.) 31 July 2008, paragraphs [0071]-[0077] (Family: none) | 1-3 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 25.12.2017 | 09.01.2018 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**EP 3 689 693 A1**

REFERENCES CITED IN THE DESCRIPTION

**Patent documents cited in the description**

- JP 2016125932 A